# EUROPÄISCHE PATENTANMELDUNG

(11) **EP 1 988 111 A1**
(43) Veröffentlichungstag der Anmeldung: **05.11.2008**
(21) Anmeldenummer: 07107296.1
(22) Anmeldetag: 01.05.2007
(51) Int. Cl.: C08G 18/79, C09J 175/04, C08G 18/42, C08G 18/60, C08G 18/62

(54) **Thermoreaktive Zusammensetzung und Verfahren zur Herstellung**

(71) Anmelder: ABEND, Thomas P., CH-6605 Locarno (CH)
(72) Erfinder: ABEND, Thomas P., CH-6605 Locarno (CH)
(74) Vertreter: Wilming, Martin

(57) **Zusammenfassung**

Die Erfindung betrifft ein Verfahren zur Herstellung einer thermoreaktiven Zusammensetzung, umfassend die Schritte: a) Bereitstellung wenigstens eines festen, insbesondere mikronisierten Di- oder Polyisocyanats; b) Bereitstellung wenigstens eines insbesondere pulverförmigen Polymers mit isocyanat-reaktiven Gruppen; c) Herstellung einer homogenen Mischung, umfassend mindestens das Isocyanat und das Polymer; d) Verdichtung der Mischung zu Formteilen; e) optional, Zerkleinern oder Mahlen der Formteile; wobei das Polymer in Anwesenheit des Isocyanats im wesentlichen nicht aufgeschmolzen wird. Besonders vorteilhaft kann im Rahmen der vorliegenden Erfindung auf ein Extrusionsverfahren, bei welchem das Polymer aufgeschmolzen wird, verzichtet werden. Hierdurch kann sowohl der notwendige Energieaufwand bei der Herstellung gesenkt als auch eine breitere Auswahl von Isocyanaten eingesetzt werden, nämlich solche, welche bei üblichen Extrusionsbedingungen bereits zu einem Anspringen der Vernetzungsreaktion führen würden.

## Beschreibung

Die vorliegende Erfindung betrifft thermoreaktive Zusammensetzungen, insbesondere heissvernetzende Schmelzklebstoffe enthaltend bei Raumtemperatur feste, insbesondere mikronisierte (Di-/ Poly)Isocyanate und bei Raumtemperatur feste Polymere mit isocyanatreaktiven Gruppen.

Bei reaktiven wärmehärtenden Klebstoffen wird angestrebt, die Energie für die Herstellung zu reduzieren, die Vernetzuhgstemperatur abzusenken, die Vernetzungsgeschwindigkeit zu erhöhen, um damit den Energieaufwand zu senken. Zudem können mit Systemen, welche bei niedrigen Reaktionstemperaturen vernetzen, Substrate mit beschränkter Wärmebeständigkeit verbunden oder beschichtet werden.

Bei der Synthese und der Verarbeitung solcher Massen, speziell in Pulverform, sind auch die rheologischen Eigenschaften von sehr grosser Bedeutung. Bei Raumtemperatur sowie bei leicht erhöhten Temperaturen müssen die Massen fest und klebfrei sein, bei Anwendungstemperatur müssen diese fliessfähig sein und die Substratoberflächen gut benetzen. Die Vernetzungsreaktionen sollen einsetzen, sobald sich die Systeme verflüssigen. Von besonderem Vorteil wäre es, wenn (nach der Substratbenetzung und Ausbildung eines homogenen flüssigen Films) die Vernetzungsreaktion weitergeht, sobald sich das System wieder abkühlt und verfestigt (Postcure).

Um Heiss-Schmelzklebstoffe zu erzeugen, welche bei tieferer Temperatur vernetzt werden können, muss sowohl
a) die Schmelz- oder Erweichungstemperatur der funktionellen Polymeren (Tm); als auch
b) die Vernetzungs- oder Reaktionstemperaturen (Tc) der dispergierten oder gelösten Vernetzungsmittel
erniedrigt sein. Das *"Temperaturfenster"* der a) Schmelz- oder Erweichungstemperatur (Tm) und b) der Vernetzungstemperatur (Tc) wird dadurch enger. Es können bei der Herstellung, Lagerung und Verarbeitung durch vorzeitiges unkontrolliertes Anspringen der Vernetzungsreaktionen Probleme entstehen.

Auf Isocyanaten basierende, thermoreaktive Zusammensetzungen, die sich im Handel befinden, werden überwiegend so hergestellt, dass funktionelle Polymere mit einem Vernetzungsmittel, zum Beispiel blockierten Isocyanaten, in einem Extruder gemischt und extrudiert werden, wobei der Erweichungs- oder Schmelzpunkt der Polymere (Tm) 20 °C bis 40 °C unterhalb der Reaktions- oder Vernetzungstemperatur (Tc) des Vernetzungsmittels liegen muss. Damit kann das Polymer im thermoplastischen Zustand oberhalb seiner Schmelztemperatur (Tm) und unterhalb der Vernetzungstemperatur (Tc) mit dem Vernetzer (und weiteren Additiven, Pigmenten, Haftvermittlern usw.) vermischt werden. Nach dem Extrudieren wird die Masse wieder unter den Schmelzpunkt (Tm) gekühlt, wobei sie sich verfestigt. Anschliessend wird das feste Extrudat gemahlen und in die gewünschten Fraktionen gesichtet.

Bei festen reaktiven Schmelzklebepulvern nach EP 598 873 oder EP 1 231 232 wird bei der Herstellung ein festes, mikronisiertes, desaktiviertes Polyisocyanat in einem verflüssigten hyroxyfunktionellen Polymer bei Temperaturen von 75 °C bis 80 °C verteilt und das Gemisch wieder auf Raumtemperatur abgekühlt. Auch in diesen Fällen ist die Erweichungs- oder Schmelztemperatur des funktionellen Polymers (Tm) um 20 °C bis 40 °C unterhalb der Anspringtemperatur der Vernetzungsreaktion (Tc) des festen, desaktivierten Isocyanats. Die verfestigten Massen werden gemahlen und in die gewünschten Fraktionen gesichtet. Diese reaktiven Schmelzkleber vernetzen in einem Temperaturfenster von 100 °C bis 150 °C. Kennzeichen der erwähnten Verfahren zum Erzeugen der reaktiven Schmelzklebersysteme ist, dass diese in verflüssigten isocyanatreaktiven Polymeren bei erhöhten Temperaturen erzeugt werden.

Die Reaktions- oder Vernetzungstemperatur (Tc) der festen mikronisierten Isocyanate entspricht nicht zwingend der Schmelztemperatur des pulverförmigen Polyisocyanates. Die Reaktions- oder Vernetzungstemperatur (Tc) des Systems wird beeinflusst durch ihre Löslichkeit im verflüssigten Polymer, durch Weichmacher und andere polare Komponenten der Mischung, durch Katalysatoren, durch die Korngrössenverteilung, durch die mögliche Oberflächen-desaktivierung, durch wechselnde Mengen von Polyaminen. Die stabilisierende Oberflächendesaktivierung von mikronisierten festen Isocyanaten ist u. a. beschrieben in EP 062 780, EP 103 323 und EP 922 720; hierauf wird verwiesen.

In handelsüblichen Reaktivmassen auf Basis fester mikronisierter Isocyanate werden heute überwiegend dimeres TDI (TDI-U, 2,4-TDI-Uretdion) mit einem Schmelzbereich von 145 °C bis 156 °C und Isophorondiisocyanat-isocyanurat (IPDI-T, IPDI-isocyanurat), Schmelzbereich 105 °C bis 115 °C, Tg 65 °C, verwendet. Die Anspringtemperaturen für Vernetzungsreaktionen (Tc) dieser festen Isocyanate in verflüssigten funktionellen Polymersystemen oberhalb der Schmelz- oder Erweichungstemperatur (Tm) sind wie folgt:

| Isocyanat (in Pulverform) | Schmelzpunkt (Tm, Koffler) | Anspringen der Vernetzungsreaktionen in verflüssigten Polymeren (Tc, DSC offset-Temperatur) |
|---|---|---|
| TDI-U | 145 °C - 156 °C | 80 °C - 100 °C |
| IPDI-T | 105 °C - 115 °C | 40 °C - 70 °C |

Bei Verwendung von sehr polaren, solvatisierenden und amorphen Polymeren und/oder polaren Zusätzen kann die Anspringtemperatur auch bei wesentlich tieferen Temperaturen liegen.

Dimeres TDI (TDI-U) ist überwiegend kristallin, löst sich aber in verflüssigten Polymeren schon ab Temperaturen zwischen 80 °C und 90 °C und reagiert mit isocyanatreaktiven Gruppen, wobei die Reaktionsgeschwindigkeit niedrig ist. Im Falle der Oberflächen-desaktivierung erhöht sich die Anspringtemperatur (Tc) um 5 °C bis 30 °C. Technisch interessante Vernetzungsgeschwindigkeiten werden ab 110 bis 120 °C erzielt. Siehe auch *"*Abschätzung der Lebensdauer geklebter Verbindungen", D. Ferrand in Symposium Proceedings Swiss Bonding 06, Herausgeber (Ed.) Schindel-Bidinelli, Swibotech 2006, Seiten 295-303.

IPDI-T, ein polymeres aliphatisches Isocyanat mit einer Funktionalität von 3-4, ist ein überwiegend amorpher Feststoff. IPDI-T geht bei einer Glasübergangstemperatur Tg von etwa 65 °C in eine extremviskose Flüssigkeit über, die im Bereich von 105 °C bis 115 °C zu einer niederviskosen Flüssigkeit schmilzt. Die Löslichkeit des IPDI-T im verflüssigten Polymer steigt oberhalb der Glasübergangstemperatur Tg stark an.

Bei der herkömmlichen Herstellung von lösungsmittelfreien reaktiven Mischungen durch Dispergierung der mikronisierten festen Isocyanate (gegebenenfalls nach Oberflächen-Desaktivierung) in einer Polymerschmelze muss die Viskosität der Polymerschmelze niedrig sein. Das bedeutet, dass die Polymerschmelze auf eine Temperatur gebracht wird, die jedenfalls 20 °C bis 30 °C oberhalb der Schmelz- oder Erweichungstemperatur der festen Polymeren (Tm) liegt. Beispielsweise muss für die Einarbeitung der festen Isocyanate bei der Herstellung der festen reaktiven Schmelzklebepulver nach EP 598 873 oder EP 1 231 232 auf Basis von Polycaprolacton oder Polyester (mit einer Polymerschmelztemperatur von etwa 55 °C bis 65 °C) die Temperatur der Polymerschmelze etwa 80 °C bis 90 °C betragen. Damit kommt die Verwendung bspw. von IPDI-T mit einer Anspringtemperatur von 40 °C bis 70 °C nicht in Frage, da es sofort mit dem geschmolzenen Polymer unter Vernetzung reagieren würde.

Einfaches homogenes Vermischen der beiden Komponenten bei Raumtemperatur ((a), Polymerpulver enthaltend isocyanatreaktive Gruppen und (b), festes mikronisiertes oberflächendesaktiviertes Polyisocyanat, wie in GB 2 400 104 beschrieben), ergibt nach Wärmeeinwirkung nicht reproduzierbare Verklebungen mit beschränkter Festigkeit. Solche Gemische sind für Klebezwecke nur beschränkt brauchbar.

Es ist daher eine Aufgabe der vorliegenden Erfindung, die Nachteile des Bekannten zu vermeiden, insbesondere also ein einfaches, zuverlässig reproduzierbares Verfahren zur Herstellung eines thermoreaktiven Schmelzklebstoffs bereitzustellen, mit welchem die Energie für die Herstellung reduziert, die Vernetzungstemperatur gesenkt und/oder die Vernetzungsgeschwindigkeit erhöht sein kann.

Diese Aufgabe wird gelöst durch die Gegenstände der unabhängigen Patentansprüche; vorteilhafte Weiterbildungen der Erfindung sind in den abhängigen Ansprüchen dargelegt.

Das Verfahren zur Herstellung einer thermoreaktiven Zusammensetzung umfasst die Schritte:
a) Bereitstellung wenigstens eines bei 20 °C und 1013 hPa festen, insbesondere mikronisierten Di- oder Polyisocyanats;
b) Bereitstellung wenigstens eines insbesondere pulverförmigen Polymers mit isocyanat-reaktiven Gruppen;
c) Herstellung einer homogenen Mischung, umfassend mindestens das Di- oder Polyisocyanat und das Polymer;
d) Verdichtung der Mischung zu Formteilen;
e) optional, Zerkleinern oder Mahlen der Formteile;
wobei das Polymer in Anwesenheit des Di- oder Polyisocyanats im wesentlichen nicht aufgeschmolzen wird.

Im Rahmen der vorliegenden Erfindung wird die Bezeichnung "Isocyanat" bzw. "Isocyanate" für Moleküle mit wenigstens zwei oder mehr NCO Gruppen verwendet, insbesondere also für Diisocyanate und Polyisocyanate. Besonders vorteilhaft kann im Rahmen der vorliegenden Erfindung auf ein Extrusionsverfahren, bei welchem das Polymer aufgeschmolzen wird, verzichtet werden. Hierdurch kann sowohl der notwendige Energieaufwand bei der Herstellung gesenkt als auch eine breitere Auswahl von Isocyanaten eingesetzt werden, nämlich solche, welche bei üblichen Extrusionsbedingungen bereits zu einem Anspringen der Vernetzungsreaktion führen würden. Durch den Verzicht auf das Aufschmelzen des Polymers in Anwesenheit des Isocyanats wird auf überraschend einfache Weise die Aufgabe der vorliegenden Erfindung gelöst; das Isocyanat wird vorzugsweise während der Herstellung der thermoreaktiven Zusammensetzung keiner Temperatur > 75 °C, vorzugsweise > 60 °C ausgesetzt. Im Rahmen der Erfindung ist es also ermöglicht, insbesondere auch reaktive Polymere einzusetzen, deren Erweichungs- oder Schmelzpunkt weniger als 40 °C unterhalb, vorzugsweise weniger als 20 °C unterhalb der Reaktionstemperatur des Isocyanats liegt, besonders bevorzugt sogar gleich oder grösser ist als die Reaktionstemperatur (Tc) des Isocyanats. Derartige Kombinationen aus reaktivem Polymer und Isocyanat waren mit den Methoden des Stands der Technik nicht zugänglich, da dies in sofortiger Vernetzung bereits bei der Herstellung resultiert hätte.

Unter *"mikronisiert"* respektive *"Mikronisierung"* wird hier und im folgenden verstanden: Alle jene Prozesse welche zu festen pulverförmigen Polymeren mit Partikelgrössen unter 300 µm führen, wie Mahlung, Cryomahlung, Sprühtrocknung von Lösungen oder Dispersionen, Sprüherstarrung von Polymerschmelzen, Sprühgranulation, Gefriertrocknung, Fällung der Polymeren aus Lösungen, Sichten oder Aussieben von Fraktionen mit Partikelgrössen unter 300 µm, ausgehend von gröberen Pulvern.
Im Falle von festen Polyisocyanaten beschränkt sich das Mikronisieren auf das Mahlen und Sichten oder Klassifizieren.

Ganz besonders bevorzugt wird in Schritt d) ein Verfahren der vorzugsweise trockenen Pressagglomeration angewendet, vorzugsweise bei Temperaturen im Bereich von etwa 10 °C bis 75 °C, bevorzugt im Bereich von etwa 20 °C bis 60 °C.

Basis und Technik des Agglomerierens und direkter Kompression von Pulvern, speziell des Pressagglomerierens zu Pellets, Briketts, Schülpen, Tabletten, sind Stand der Technik und dem Fachmann bekannt. Sie sind umfassend beschrieben in G. Heinze; Handbuch der Agglomerationstechnik, (Wiley-VCH Weinheim, 2000), W. Pietsch; Agglomeration / Processes and Industrial Applications, (Wiley-VCH Weinheim, 2004), G. Alderborn, C. Nyström; Pharmaceutical Powder Compaction Technology, (Marcel Dekker New York, 1996); die genannten Dokumente werden hinsichtlich des Verfahrens der Pressagglomeration durch Bezugnahme in den vorliegenden Anmeldungstext aufgenommen. Agglomerierung, direkte Kompression und Kompaktierung von Pulvern sollen hier unter der Bezeichnung Pressagglomeration zusammengefasst werden.

Für die trockene Pressagglomeration bei Raumtemperatur oder bei leicht erhöhter Temperatur (nach oben begrenzt durch die Anspringtemperatur des Isocyanats und Erweichungstemperatur des Polymeren) eignen sich u. a. folgende Anlagen:
- Hydraulische Pressen, Tablettiermaschinen. In den mechanischen oder hydraulischen Pressen, wie Tablettierpressen, soll ein Druck auf das Pulvergemisch resp. den Pressling im Bereich von 10 - 750 N/mm², bevorzugt 15 bis 350 N/mm² einwirken können. Der maximale Pressdruck auf den Pressling kann bis 10 Sekunden dauern.
- Wälzdruckmaschinen mit einem Druck auf das Pulvergemisch respektive den Pressling von 1 bis 200 kN/cm Walzenbreite, (Zweiwalzenpressen, speziell Schülpenpressen mit glatten, geriffelten oder geformten Walzen, Brikettiermaschinen), Lochpressen (Pelletiermaschinen, Zahnradlochwalzenpressen).

Für die Pressagglomeration werden die Pressen vorzugsweise in jenem Bereich der möglichen Pressdrücke eingesetzt, welche den Erhalt fester Presslinge mit minimalem Porenvolumen gewährleisten; geeignete Pressdrücke können in fachüblichen Routineversuchen leicht ermittelt werden. Teile der Pressen oder Walzen, die mit dem Produkt in Berührung kommen, können thermostatiert oder gekühlt sein. Der optimale Druck auf die Walze, die Umfangsgeschwindigkeit und die Temperatur, respektive der Druck pro Fläche bei der Kompaktierung in der Tablettierpresse müssen durch fachübliche Routineversuche ermittelt werden. Die plastischen, viskoelastischen und elastischen Eigenschaften sowie der Fliesspunkt jedes Polymers und jeder Polymermischung sind verschieden. Die festen Isocyanate sind mehr oder weniger kristallin oder amorph, sie sollen bei der Kompaktierung unter ihrer Schmelz- oder Glastemperatur Tg sein. Bei den Druckverhältnissen in den Tablettenpressen oder in den Wälzdruckmaschinen, welche nötig sind, um die Polymeren zum kalten *"Fliessen"* zu bringen, verhalten sich die mikronisierten festen Isocyanate damit wie ein inerter Füllstoff, es findet keine Fragmentierung statt. Durch die Pressagglomeration werden die festen mikronisierten Isocyanate vom Polymer weitgehend umhüllt.

Die Produkte der Pressagglomeration, wie Presslinge, Schülpen, Pellets, Briketts, Tabletten werden anschliessend optional zerkleinert, gemahlen und in die gewünschten Fraktionen gesichtet oder gesiebt. Für thermoreaktive Klebstoffe und Sinterpulver werden die gemahlenen Kompaktierprodukte beispielsweise in Fraktionen mit den folgenden Grenzen klassifiziert: 0 - 80, 0 - 125, 0 - 160, 80 - 160, 0 - 200, 80 - 200, 200 - 300, 0 - 500, 200 bis 500, 300 - 500, 0 - 600 µm. Die Methoden und Anlagen sind dem Fachmann bekannt.

Produkte basierend auf Polymeren mit Erweichungs- oder Schmelztemperaturen (Tm) von über 60 °C bis 70°C können bei Raumtemperatur gemahlen werden, bei Erweichungs- oder Schmelztemperaturen (Tm) von unter 70 °C bis 60 °C muss üblicherweise Cryogenvermahlung mit Hilfe von flüssigem Stickstoff oder fester Kohlensäure angewendet werden. Im Falle der Oberkornbegrenzung oder Feinteilreduzierung können die ausgeschiedenen Fraktionen wieder der Pressagglomeration zugeführt werden. Additive zur Fliessfähigkeit der Pulver können beigegeben werden.

Bei anschliessender Erwärmung der erfindungsgemässen Zusammensetzungen auf Vernetzungstemperatur beschleunigt die grosse Kontaktfläche zwischen festem Polyisocyanat und Polymer die Diffusion des Vernetzungsmittels im verflüssigten Polymer und die Reaktionen mit den isocyanatreaktiven Gruppen des Polymers. Der enge Kontakt mit dem festen und flüssigen polaren Polymer kann auch die Anspringtemperatur der Vernetzungsreaktion (Tc) erniedrigen, gleichzeitig kann die Vernetzungsreaktion durch Katalysatoren beschleunigt werden.

Die nach der Pressagglomeration und ggf. dem Mahlen entstehenden latent reaktiven Formkörper, Agglomerate bzw. Pulver sind bei Raumtemperatur während mindestens 4 Monaten lagerstabil. Sie sind hervorragend als Schmelzklebstoff geeignet, können bspw. aber auch, ggf. nach anwendungsbezogener Modifikation, für (Pulver)Beschichtungen, Pulverlackierungen, als Sinterpulver für das Slush Molding Verfahren, oder dergleichen eingesetzt werden.

In besonders bevorzugten Ausführungsformen weist das wenigstens eine insbesondere pulverförmige Polymer Partikelgrössen von kleiner 300 µm, vorzugsweise von kleiner 160 µm, besonders bevorzugt von kleiner 80 µm auf, wobei die angegebenen oberen Grenzen mindestens 96 % der Verteilungssumme Q umfassen sollen. Maximal 4 % der Partikel können über der angegebenen oberen Grenze liegen.

Die Partikelgrössen, Partikelgrössenverteilungen, Verteilungssummen und die spezifischen Oberflächen werden gemäss den Methoden der Laserbeugung mit Geräten der Firmen Sympatec Helios, Quantachrome CILAS, Malvern Mastersizer und anderen Anbietern bestimmt und errechnet. Die volumenbasierte Partikelgrössenverteilung nimmt als Dichte der Polymeren und Polyisocyanate eine Dichte von 1.0 g/cm³ an. Auf Messungen mit solchen Geräten unter Standardbedingungen, soweit nicht anderweitig explizit erwähnt, wird vorliegend Bezug genommen.

In weiteren, besonders bevorzugten Ausführungsformen weist das feste, insbesondere mikronisierte Isocyanat eine arithmetisch gemittelte Partikelgrösse d₅₀ im Bereich von etwa 0.01 µm bis etwa 25 µm auf, vorzugsweise im Bereich von etwa 0. 1 µm bis etwa 10 µm.

Im Verlaufe der experimentellen Studien hat es sich überraschenderweise gezeigt, dass sowohl
a) feste mikronisierte Polyisocyanate; wie auch
b) feste mikronisierte oberflächendesaktivierte Polyisocyanate
für den erfindungsgemässen Zweck eingesetzt werden können. In beiden Fällen ergeben sich durch Pressagglomeration von Gemischen mit pulverförmigen isocyanatreaktiven Polymeren bei Raumtemperatur lagerstabile und latent heissvernetzende Mischungen von isocyanatreaktiven Polymeren mit festen mikronisierten Polyisocyanaten. Die aus dem Stand der Technik bekannte Extrusion von reaktiven Polymeren mit Isocyanaten würde im Fall von nicht blockierten Isocyanaten zu vorzeitiger Vernetzung führen. Die vorliegende Erfindung eröffnet also ein breiteres Anwendungsspektrum.

Die stabilisierende Oberflächendesaktivierung von mikronisierten festen Isocyanaten ist u. a. beschrieben in EP 062 780, EP 103 323 und EP 922 720. Diese kann auch dazu dienen, die Anspringtemperaturen für Vernetzungsreaktionen (Tc) im Vergleich zu nicht-desaktivierten festen Isocyanaten zu erhöhen. Die Konzentration des Desaktivierungsmittels soll in der Regel 0.1 bis 25, bevorzugt 0.5 bis 10 Equivalentprozent betragen, bezogen auf die Gesamtheit der vorhandenen Isocyanatgruppen.

Die Oberflächenstabilisierungsreaktion kann auf verschiedenen Wegen durchgeführt werden:
- Durch Dispersion des pulverförmigen Isocyanats in einer Lösung des Desaktivierungsmittels in einem nichtlösenden flüssigen Dispersionsmittel (Wasser oder Lösungsmittel) und anschliessender Isolierung und Trocknung.
- Durch Zugabe des Desaktivierungsmittels oder einer Lösung desselben zur Dispersion der festen feinteiligen Isocyanate in Wasser oder Lösungsmittel, anschliessender Isolierung und Trocknung.
- Durch Aufsprühen eines Polyamins oder einer Lösung desselben auf das feste Isocyanat oder auf die Pulvermischung.
- Durch Zugabe eines Polyamins, adsorbiert auf einem Träger wie mikronisierter Kieselsäure oder Molekularsiebpulver, zum festen pulverförmigen Isocyanat oder zur Pulvermischung.
- Durch Eintragen einer Schmelze eines niederschmelzenden Polyisocyanats in eine Lösung des Desaktivierungsmittels in einem nichtlösenden flüssigen Dispersionsmittel und anschliessender Kristallisation, Isolierung und Trocknung.

Die Erfindung betrifft in einem weiteren Aspekt also eine thermoreaktive Zusammensetzung, insbesondere einen Heiss-Schmelzklebstoff, erhältlich durch ein Verfahren wie vorstehend dargelegt. Eine solche Zusammensetzung enthält
- wenigstens ein festes, insbesondere mikronisiertes Di- oder Polyisocyanat;
- wenigstens ein insbesondere pulverförmiges Polymer mit isocyanat-reaktiven Gruppen;
wobei das Isocyanat und das Polymer schmelzfrei und im wesentlichen unreagiert vereinigt vorliegen.

Besonders vorteilhaft ist durch die vorliegende Erfindung ermöglicht, dass der Erweichungs- oder Schmelzpunkt (Tm) des Polymers weniger als 40 °C unterhalb, vorzugsweise weniger als 20 °C unterhalb der Reaktionstemperatur (Tc) des Isocyanats a) liegt, besonders bevorzugt gleich oder grösser ist als die Reaktionstemperatur (Tc) des Isocyanats.

Ein weiterer Aspekt der Erfindung betrifft die Verwendung einer vorstehend beschriebenen, thermoreaktiven Zusammensetzung als Heiss-Schmelzklebstoff.

Als Polyisocyanate sind im Rahmen der Erfindung jedenfalls alle Di- oder Polyisocyanate oder deren Gemische geeignet, sofern sie einen Schmelzpunkt von mindestens 35 °C (bei 1013 hPa) aufweisen und sich durch bekannte Methoden in Pulverform mit mittleren Teilchengrössen d₅₀ unter 25 µm überführen lassen. Es können aliphatische, cycloaliphatische, heterocyclische oder aromatische Polyisocyanate sein. Als Beispiele werden, neben festen isocyanatterminierten Prepolymeren von Polyisocyanaten mit kurzkettigen Polyolen oder Polyaminen gemäss US 5,338,819 und US 5,043,472, Pulverlackhärter mit freien Isocyanatgruppen gemäss EP 254 152, oder Mischungen hiervon, insbesondere genannt:

| Isocyanat | Schmelzpunkt [°C] |
|---|---|
| Diphenylmethan-2,4'-diisocyanat (2,4'-MDI) | 35 |
| Diphenylmethan-4,4'-diisocyanat (MDI) | 40 |
| 1,4-Cyclohexan-diisocyanat (CHDI) | 60 |
| 3,3'-Dimethyl-biphenyl-4,4'-diisocyanat (TODI) | 68 |
| p-Tetramethylenexylene-diisocyanat (p-TMXDI) | 72 |
| p-Phenylenediisocyanate (PPDI) | 94 |
| Isocyanurat des Isophorondiisocyanats (IPDI-T) | 110 |
| Naphthalin-1,5-diisocyanat (NDI) | 131 |
| dimeres TDI, dimeres 1-Methyl-2,4-phenylen-diisocyanat (TDI-U) | 156 |
| 3,3'-Diisocyanato-4,4'-dimethyl-N,N'-diphenylharnstoff (TDIH) | 180 |

Ein besonderer Vorteil des erfindungsgemässen Verfahrens und der damit hergestellten Massen ist, dass die Vernetzungstemperatur (Tc) des festen Isocyanats je nach Wunsch höher oder tiefer gewählt sein kann als die Glastemperatur (Tg) oder die Erweichungs- oder Schmelztemperatur (Tm) des funktionellen Polymers. Es können auch amorphe Polyisocyanate verwendet werden, sowohl aromatische als auch aliphatische.

Um die Vernetzungsreaktion zu steuern, können auch Katalysatoren oder ihre Mischungen zugegeben werden. Beispiele für Urethankatalysatoren sind organische Zinn-, Eisen-, Blei-, Kobalt-, Wismuth-, Antimon-, Zink-, Aluminium, Titan- und Zirkonverbindungen. Tertiäre Amine wie Dimethylbenzylamin, Diazabicyclooctan (DABCO), Diazabicycloundecen (DBU) oder Diazabicyclononen (DBN), sowie nichtflüchtige Polyurethanschaumkatalysatoren auf tertiärer Aminbasis können für spezielle Zwecke oder in Kombination mit Metallkatalysatoren verwendet werden, die katalytische Aktivität der Amine kann aber durch Umsetzung mit dem Kohlendioxyd der Luft beeinträchtigt werden.

Die Konzentration der Katalysatoren liegt üblicherweise im Bereich von 0.001 % bis 3 %, bevorzugt 0.01 % -1 % bezogen auf das reaktive System.

Die Katalysatoren können in mikronisierter Form zum Pulver der Polymeren zugegeben werden, im Polymer mit den isocyanatreaktiven Gruppen gelöst sein, adsorbiert auf mikronisierter Kieselsäure oder Molekularsiebpulver dem Polymerpulver beigegeben werden, oder auf die Pulvermischung aufgesprüht werden.

Als erfindungsgemässe Reaktionspartner der festen mikronisierten Isocyanate kommen bei Raumtemperatur feste Polymere in Frage, welche isocyanatreaktive funktionelle Gruppen tragen, welche endständig oder seitenständig sein können. Pro Molekül sollen minimal 2 funktionelle isocyanatreaktive Gruppen vorhanden sein.

Die Polymere enthalten 0.1 bis etwa 40, bevorzugt 0.2 bis 20 Gewichtsprozent isocyanatreaktive Gruppen, wie Hydroxyl-, phenolische Hydroxyl-, Amino-, Carboxyl-, Amid-, Urethan und Harnstoffgruppen. Aminofunktionelle Polymere weisen den Vorteil auf, dass sie sich bei feuchten oder nassen Bedingungen (ohne Nebenreaktion durch Wasser) mit den festen mikronisierten Isocyanaten vernetzen lassen.

Das Molekulargewicht des Polmyers liegt typischerweise im Bereich von 500 bis 1'000'000 Da, bevorzugt im Bereich von 1000 bis 100'000 Da. Der Schmelzpunkt oder Erweichungsbereich (Tm) der Polymeren oder eines Polymergemisches liegt typischerweise im Temperaturbereich von 40 °C bis 140 °C. Die Glasübergangstemperatur (Tg) von Polymeren bspw. für Pulverbeschichtungen sollte normalerweise aus praktischen Gründen nicht unter 40 °C liegen.

Das Verhältnis der Equivalente zwischen den Isocyanatgruppen in den feinteiligen Polyisocyanaten und der Summe der Hydroxyl-, Aminogruppen und weiterer isocyanatreaktiver Gruppen der Polymeren soll in der Regel im Bereich 0.01 bis 100, bevorzugt 0.1 bis 10, ganz besonders bevorzugt 0.5 bis 5 betragen.

Geeignet sind Polymere oder Copolymere mit isocyanatreaktiven Gruppen, zum Beispiel Polyvinylalkohol, teilhydrolysiertes EVA oder Polyvinylacetat, PVC-Copolymere mit Hydroxylgruppen, Ethylen-copolymere, Polyvinylformal, feste Polyole wie Polytetrahydrofuran, hydrierte Polybutadiendiole oder pflanzliche Öle mit Hydroxylgruppen (einschliesslich dimerisierte), Hydroxyethyl- oder Hydroxypropylcellulose, hydroxyfunktionelle kristalline oder amorphe Polyester, Polycaprolactone und ihre Copolyester, Polycarbonate, thermoplastische Polyurethane und Polyharnstoffe, Aminoharze, Melaminharze, Polyamidoamine, Copolyamide, welche Hydroxyl-, primäre oder sekundäre Aminogruppen oder Säuregruppen tragen, Polyesteramide, Phenoxyharze, Poly(meth)acrylate oder -copolymere, höhermolekulare feste Epoxyharze oder ihre festen Aminaddukte, Produkte der Michael-Addition von primären Aminen an aktivierte, ungesättigte polymere Doppelbindungen, oder ihre Mischungen.

Die isocyanatreaktiven Polymere werden nach bekannten Methoden vorzugsweise in Pulverform gebracht, mit Partikelgrössen von 0 bis 300 µm, bevorzugt von 0 bis 160 µm, ganz besonders bevorzugt von 0 bis 80 µm, wobei die angegebenen Grenzen 96 % der Verteilungssumme Q umfassen sollen.
Die Methoden hierzu sind Stand der Technik. Im Wesentlichen sind dies:
a) Mahlung oder Kaltmahlung von Polymeren, die in Form von groben Pulvern, Pastillen, Granulaten vorliegen.
b) Extrusion von geschmolzenen Polymeren, anschliessende Abkühlung unter den Erweichungspunkt, Zerkleinerung und Mahlung zum gewünschten Pulver.
c) Polymerisation oder Polyaddition von Monomeren oder ihren Gemischen in Lösung, Dispersion, Emulsion oder Suspension, anschliessende Isolation in Pulverform, zum Beispiel durch Sprühtrocknung bei erhöhten Temperaturen, Filtration oder Zentrifugierung, und anschliessender Trocknung.
d) Lösen der Polymeren in einem Lösungsmittel bei Raumtemperatur oder erhöhter Temperatur, anschliessend Fällung durch Reduktion der Temperatur oder Zufügen einer nichtlösenden Flüssigkeit.
e) Sieben von groben Polymerpulvern und Isolieren von Fraktionen mit Partikelgrössen unter 300 µm.

Den Polymeren, den mikronisierten Isocyanaten oder der Pulvermischung derselben können Zuschlagstoffe beigefügt werden. Zuschlagstoffe können in den vorgenannten Komponenten zugemischt, gelöst, dispergiert oder an mikronisierten Silikaten und Molekularsiebpulver adsorbiert sein. Flüssige Zuschlagstoffe oder solche gelöst in Wasser, Lösungsmitteln oder Weichmachern, können auch mit Mikroaufsprühsystemen auf eine der Komponenten aufgesprüht werden.

Die Zuschlagstoffe und ihre Gemische können ausgewählt werden aus der Gruppe bestehend aus flüssigen und festen Weichmachern, Ölen, Wachsen, Harzen, Verlauf- und Substratbenetzungsmitteln, Entgasungs- und Entlüftungsmitteln, Haftharzen, Haftvermittlern, organischen oder anorganischen Füllstoffen, nanoskaligen Füllstoffen, Polyanilinen, Russ, Graphit, Kohlenstofffasern, Fasern, mikronisierten Metallen oder Metalloxyden, Ferriten, Barium- oder Blei-Titanaten oder -Zirkonaten, piezoelektrischen Partikeln, magnetischen Partikeln, thermoplastischen Kunststoffpulvern, Pigmenten, Farbstoffen, Lichtstabilisatoren, Alterungsstabilisatoren oder Antioxydantien, Säurefängern, Korrosionsschutzmitteln, Flammschutzmitteln, Treibmitteln, organofunktionellen Silanen, niedermolekularen flüssigen oder festen amino- oder hydroxyfunktionellen Verbindungen (wie Isophthalsäuredihydrazid, Pentaerythrit). Optimale Einsatzmengen, Effekte und Nutzen der Zuschlagstoffe sind dem Fachmann bekannt.

Polymerpulver, mikronisierte feste Isocyanate und gegebenenfalls Zuschlagstoffe werden vor der Pressagglomeration zu einer möglichst homogenen Pulvermischung, wenn möglich mit einer möglichst statistischen Verteilung, vereint. Die dafür gebrauchten Anlagen sind Stand der Technik. Die Methoden sind beschrieben in Handbook of Powder Science and Technology; edited by M. E. Fayed and L. Otten, Van Nostrand Reinhold Comp.; New York, 1984. Mixing in the Process Industries; Ed. by N. Harnby, M. F. Edwards, A. W. Nienow; Butterworth and Heinemann; London, 1992. Powder Mixing; B. H. Kaye; Chapman & Hall, London, 1997. Handbook of Industrial Mixing: Science and Practice; edited by E. L. Paul, et al.; John Wiley and Sons, New York, 2004.

Die Mischungsgüte hängt von den Eigenschaften der Komponenten wie Dichte, Mischungsverhältnis, Teilchengrössenunterschiede, Teilchenform, mittlere Teilchengrösse, Teilchengrössenverteilung, Oberflächenstruktur sowie der Art des Mischers ab. Die Verfahren können kontinuierlich oder diskontinuierlich sein und hängen davon ab, ob einzelne Anteile oder die Pulvermischung frei fliessend oder kohäsiv sind. Verwendet werden u. a. Schwerkraftmischer, Turbulamischer, Containermischer, Fassmischer, Konusmischer, Nautamischer, Zwangsmischer, Gegenstrommischer, Planetenmischer, Schneckenmischer, Wurfmischer, Ribbonmischer, Turbomischer, Schaufelmischer, Paddelmischer, Pflugscharmischer, Rubergmischer, Schnellmischer, Henschelmischer.

Im Rahmen der Erfindung werden besonders vorteilhaft vor allem Zwangsmischer oder Schnellmischer und weniger Schwerkraftmischer eingesetzt, da einige Bestandteile schwer verteilbare Agglomerate bilden. Agglomerate können auch unter gleichzeitiger Einwirkung von Ultraschall desagglomeriert werden. Die verwendete Mischmethode muss je nach Zusammensetzung durch fachübliche Routineversuche ermittelt werden.

In der Zuführung der Pulvermischung zur Presse, wo die Verdichtung stattfindet, werden üblicherweise rotierende Schnecken, Stopfschnecken, und/oder statische Mischer verwendet, um ein Entmischen der Pulvermischung zu verhindern. Die Zuführaggregate können thermostatiert sein.

Im Falle der direkten Kompaktierung mit Tablettenpressen können die Tabletten auch ohne Zerkleinerung als beispielsweise reaktive Hotmelt Tabletten für Verklebungen oder Versiegelungen verwendet werden. Durch geeignete Formungsverfahren können aus den Pulvermischungen oder Pressagglomeraten auch (unreagierte) Profile, Bänder oder andere Presslinge hergestellt werden.

Die Lagerung der Produkte oder Pulver erfolgt bei Raumtemperatur. Die erfindungsgemässen Pulvermischungen sind bei Raumtemperatur während mindestens 4 Monaten stabil. Die Oberflächen können mit mikronisierten Kieselsäuren als Trennmittel versehen werden. Die Produkte sind im unvernetzten Zustand fest und vorzugsweise klebfrei. Gegebenenfalls werden die Formkörper bzw. Pulver in Wasser oder Gas-undurchlässige Verpackungen verpackt.

Die Vernetzung erfolgt bei Einwirken von Wärme bei Temperaturen oberhalb der Schmelztemperatur oder des Erweichungsbereichs (Tm) des isocyanatreaktiven Polymers und oberhalb der Glasübergangs-(Tg) oder der Schmelztemperatur (Tm) des festen Isocyanats. Nach Überschreiten der Schmelztemperatur oder des Erweichungsbereichs (Tm) des isocyanatreaktiven Polymers lösen sich die festen Isocyanate im geschmolzenen Polymer, die Vernetzungsreaktion mit den funktionellen Gruppen setzt ein. Durch höhere Temperaturen werden Diffusion und Vernetzungsreaktionen der Reaktionskomponenten beschleunigt. Die Vernetzungstemperatur und - geschwindigkeit werden durch das isocyanatreaktive Polymer, das feste, insbesondere mikronisierte Isocyanat, gegebenenfalls durch die Oberflächendesaktivierung des Isocyanats mit Polyaminen, durch Katalysatoren und polare Additive bestimmt.

Je nach den Bestandteilen des Systems müssen die Vernetzungsbedingungen oder Aushärtungsfenster in der Wärme, wie auch die Nachvernetzung bei Raumtemperatur, experimentell ermittelt werden; derartige Versuche sind fachübliche Routine.

Ein besonderer Vorteil des erfindungsgemässen Systems ist es, dass nach dem Einleiten der Vernetzungsreaktion in der Wärme und Ausbildung eines flüssigen Polymerfilms die Aushärtungsreaktion auch nach dem Abkühlen auf Raumtemperatur anhält (Postcure). Bis 90 % der Endfestigkeit wird etwa nach 1 bis 7 Tagen erreicht, abhängig von der Zusammensetzung des Produktes. Niedere Tg des Polymers, des Polyisocyanats, polare Begleitstoffe und Katalysatoren beschleunigen die Nachvernetzung.

Die thermoreaktiven Zusammensetzungen gemäss der Erfindung können, ggf. nach anwendungsbezogener Modifikation, auch als Pulverbeschichtungen verarbeitet werden; sie unterscheiden sich von den kommerziell verfügbaren Pulverbeschichtungen durch eine sehr tiefe erreichbare Vernetzungstemperatur resp. hohe Vernetzungsgeschwindigkeit. Durch die niedrigen Einbrenntemperaturen wird Energie gespart. Die tiefe Vernetzungstemperatur erlaubt die Anwendung auf wärmeempfindlichen Substraten, wie Kunststoffe, Holz, MDF-Panele, Schäume, etc. Tiefe Vernetzungstemperatur ist auch von Vorteil im Falle von Metallen, welche eine Versprödung und Verfestigung bei höheren Einbrenntemperaturen zeigen.

Die Applikation und Vernetzung der erfindungsgemässen reaktiven Schmelzkleber erfolgt direkt oder nach vorgängigem Sintern auf Oberflächen des Substrates. Bei der Vorbeschichtung soll die Temperatur der Oberfläche, auf welches das reaktive Pulver aufgesintert wird, etwa 5 bis 15 °C über der Schmelztemperatur oder dem Erweichungsbereich des Polymers liegen. Nach dem Aufsintern wird sofort wieder gekühlt, die Vorbeschichtung ist bei Raumtemperatur mindestens 2 Monate lagerfähig.

Die latent reaktiven Pulver können auch in Form einer Dispersion in wässerigen oder lösungsmittelhaltigen filmbildenden Systemen eingesetzt werden. Bedingung ist, dass die flüssige Phase praktisch keine Lösungswirkung auf den pulverförmigen reaktiven Schmelzkleber oder die Pulverbeschichtung hat. Andernfalls empfiehlt sich die Anwendung von desaktivierten festen Isocyanaten. Es können zusätzlich lösliche reaktive oder nichtreaktive Bindemittel und Zuschlagstoffe beigefügt werden. Solche Zubereitungen können nach Verflüchtigen des Lösungsmittels oder Wassers bei erhöhter Temperatur unmittelbar oder nach längerer Lagerdauer vernetzt werden.

Die erfindungsgemässen pulverförmigen reaktiven Schmelzkleber können auch in monomerenfreien Isocyanatprepolymeren und UVvernetzenden Prepolymeren, haftklebenden Polymeren und weiteren flüssigen Phasen verteilt werden, sofern sie für die pulverförmigen reaktiven Schmelzkleber bei Raumtemperatur nicht lösend und reaktiv sind.

Die Wärmezufuhr für die thermoplastische Verarbeitung sowie für die Vernetzung kann mit Kontaktwärme, Konvektionswärme, Heissluft oder Heissgas, Widerstandsheizung, Ultraschallerwärmung, Vibrationserwärmung, Reibschweissen, elektromagnetischer Strahlung (zum Beispiel Infrarot-, Induktions-, Mikrowellen-, Laserstrahlung) erfolgen.

Mögliche Anwendungen für die erfindungsgemässen, latent wärmereaktiven Schmelzsysteme sind:
- Klebstoffe für Textilien, Vliese, Folien, Leder, Papier, Karton, Schaum, Holz, Metalle, Kunststoffe, Baustoffe, keramische Teile oder Glas, elektronische Bauteile, Laminierkleber, autoklavierbare Klebstoffe, Sicherheitsklebstoffe für Dokumente, Arzneimittel- oder Nahrungsmittelverpackungen;
   sowie ggf. nach anwendungsspezifischer Modifikation:

- vernetzbare Pulverbeschichtungen, ihre Dispersionen in Wasser oder in nichtsolvatisierenden Lösungsmitteln, Sinterpulver, redispergierbare Pulver, Beschichtungen;
- Thermoreaktive Sinterpulver für das Slush-Molding Verfahren, für Rotationsgiessen, Rotationssintern, Schleuderguss, für die Herstellung von Kompositwerkstoffen, für reaktive Extrusion und Reaktionsspritzgiessverfahren, heissvernetzende Klebstoffe für Beschriftungen im In-Mold-Verfahren.

Die Erfindung wird nachfolgend zum besseren Verständnis anhand von Ausführungsbeispielen erläutert, ohne den Gegenstand der Erfindung auf die dargestellten Ausführungsformen zu beschränken.

### A) Methoden

### A1) Herstellung der Pulvermischungen

Die isocyanat-reaktiven Polymere wurden, wo notwendig, durch Mahlen oder Kaltmahlen in die angegebenen Fraktionen gemahlen und gesiebt. Die Polymerpulver wurden mit den festen Isocyanaten und Zuschlagstoffen mittels elektrischem Handrührer mit zwei ineinander greifenden Spiralrührern während 10 Minuten gemischt. Die unverdichteten Pulvermischungen waren bei Raumtemperatur mindestens während 4 Monaten stabil.

### A2) Pressagglomeration

Die Pulver wurden bei Raumtemperatur mit einer hydraulischen Tablettenpresse PP 25, Retsch GmbH, (D-Haan) mit maximal 25 Tonnen Pressdruck verdichtet. Es wurden folgende runde Presswerkzeuge aus rostfreiem Stahl verwendet:
- Durchmesser 32 mm, maximaler Druck auf den Pressling 244 N/mm² bei 20 Tonnen hydraulischem Pressdruck an der Tablettenpresse.
- Durchmesser 40 mm, maximaler Druck auf den Pressling 156 N/mm² bei 20 Tonnen
- Einfüllgewicht 4 bis 8 g, ergibt max. 5 mm bis 6 mm dicke Tabletten.

Alternativ wurde eine kontinuierliche Kompaktiermaschine zur Trockengranulierung RC 100x30 der Firma Powtec Maschinen und Engineering GmbH (D-Remscheid) bei Raumtemperatur mit einer Presskraft von maximal 16 kN/cm Walzenbreite verwendet. Die Drücke bewegten sich bei den Versuchen im Bereich von 2.6 bis 4.7 kN/cm.

### A3) Mahlen der Tabletten oder des Schülpenmaterials

Die Tabletten oder Schülpen wurden auf Partikelgrössen von 1 bis 5 mm gebrochen und bei Raumtemperatur zerkleinert oder unter Beigabe von flüssigem Stickstoff oder festem Kohlendioxyd kryo- oder kalt-gemahlen. Für das Mahlen (auch der festen Isocyanate und Polymeren) wurden Stiftmühlen oder Ultrazentrifugalmühlen mit passenden Sieben verwendet.

Diese Pulver wurden bei Raumtemperatur in geschlossenen wasserundurchlässigen Behältern gelagert, sie sind bei Raumtemperatur minimal 4 Monate lagerstabil.

### A4) Vernetzungsbedingungen

Im Umluftofen während 30 Minuten bei den angegebenen Temperaturen.

### A5) Prüfung der Wärmebeständigkeit oder Wärmestandfestigkeit

Prüflinge aus Buchenholz mit den Massen 100 x 20 x 5 mm³ und Aluminium mit den Massen 20 x 100 x 1 mm³ (mit organofunktionellem Silangemisch geprimert) wurden einfach überlappend bei Raumtemperatur press-verklebt und bei den angegebenen Zeiten und Temperaturen vernetzt. Prüflinge: Alu gegen Holz, Überlappung 20 mm, Klebefläche 20 x 20 mm².

Die zu prüfenden Pulver mit oberer Partikelgrösse von 80 bis 300 µm wurden mit einer Menge von 50 bis 150 g/m² auf die Oberfläche der Buchenholzprüflinge gestreut. Die Prüflinge aus Holz- und Aluminium wurden während den angegebenen Zeiten und Temperaturen im Umluftofen unter leichtem Klammerdruck vernetzt. Die Prüflinge wurden vor der Prüfung 7 bis 10 Tage bei Raumtemperatur nachvernetzt.

Für die Bestimmung der Temperaturfestigkeit nach den angegebenen Lagerungen bei Raumtemperatur wurden die Prüflinge senkrecht in den Umluftofen bei 150 °C gehängt und mit 300 g belastet. Rascher Wärmeübergang ist gewährleistet durch die einseitige Verwendung von Aluminiumblech. Haftverlust der Klebeflächen führte zum Fallen der Gewichte. Die Zeit bis zum Haftverlust bei 150 °C wurde festgehalten.

Alle geprüften Polymere (ohne Zusatz von mikronisierten Isocyanaten) zeigten bei 150 °C innerhalb von 2 bis 6 Minuten Haftverlust, demgegenüber zeigten die erfindungemässen Produkte auch nach 30 Minuten bei 150 °C keinen Haftverlust.

### A6) Applikation und Prüfung der Pulverbeschichtungsmassen

Die Pulver wurden auf Silan-geprimertes Aluminium appliziert und im Umluftofen während 30 Minuten bei 95 °C eingebrannt. Die Pulverbeschichtungsmasse, welche aus wässeriger Dispersion appliziert wurde, wurde erst bei Raumtemperatur getrocknet.

Neben der Bestimmung auf Wärmestandfestigkeit bei 150 °C (siehe vorstehende Methode) wurde die Vernetzung geprüft nach PCI, The Powder Coating Institute / Test Method No. 8 *"Solvent Cure Test"* mit einer Mischung aus 90 % Xylol und 10 % MEK.

### B) Verwendete Materialien

### B1) Feste Isocyanate

### TDI-U 1:

Dimeres TDI / TDI-Uretdion /Metalink U (Acima AG, CH-Buchs); Aromatisches Diisocyanat, f = 2; Isocyanatgehalt 22.5 -24.5 %; Schmelzbereich 145 bis 156 °C; mittlere Partikelgrösse d₅₀ 7.5 µm, 4 % < 1 µm, 95 % < 18 µm.

### IPDI-T 2:

Trimeres Isophorondiisocyanat, IPDI-isocyanurat;
aliphatisches polymeres Isocyanat; f = 3-4; Isocyanatgehalt 17 - 18 %, Tg ca. 65 °C, Schmelzbereich (Koffler) 105 - 155 °C.

### IPDI-T 2.1:

Desmodur Z XP 2589, (Bayer MaterialScience, D-Leverkusen);
Mittlere Partikelgrösse d₅₀ 1.2 µm, 40 % < 1 µm, 95 % < 5 µm

### IPDI-T 2.2:

Vestanat T 1890/100 (Degussa AG, D-Marl);
gemahlen auf mittlere Partikelgrösse d₅₀ 13.8 µm, 4 % < 1 µm, 95 % < 55 µm

### IPDI-T 2.3:

Vestanat T 1890/100 (Degussa AG, D-Marl);
gemahlen auf mittlere Partikelgrösse d₅₀ 8.2 µm, 4 % < 1 µm, 95 % < 30 µm. In wässeriger Dispersion oberflächendesaktiviert mit 10 Equivalentprozent Jeffamine T 403, anschliessend getrocknet.

### B2) Isocyanatreaktive thermoplastische Polymerpulver

### Capa 2803:

Hydroxyfunktionelles lineares Polycaprolacton (Solvay Caprolactones, UK Warrington);
Molekulargewicht 8'000 Da, Schmelzpunkt 58 -60 °C, Hydroxylwert 14 mg/KOH/g. Cryogemahlen zum Pulver mit Fraktion 0 - 80 µm, < 4 % über 80 µm.

### Capa 6100:

Hydroxyfunktionelles lineares Polycaprolacton (Solvay Caprolactones, UK Warrington);
Molekulargewicht 10'000 Da, Schmelzpunkt 58 -60 °C, Hydroxylwert 11 mg/KOH/g. Cryogemahlen zum Pulver mit Fraktion 0 - 80 µm, < 4 % über 80 µm.

### Capa 4801:

Hydroxyfunktionelles Polycaprolacton (Solvay Caprolactones, UK Warrington);
Molekulargewicht 8'000 Da, Funktionalität 4; Schmelzpunkt 40 - 50 °C, Hydroxylwert 28 mg/KOH/g, Cryogemahlen zum Pulver mit Fraktion 0 - 80 µm, < 4 % über 80 µm.

### Degalan VP 1029 F:

Perlpolymerisat auf Basis eines Copolymeren von Methylmethacrylat und n-Butylmethacrylat (Röhm GmbH, D-Darmstadt);
Tg = 60 °C, Hydroxylzahl ca. 4, OH-Equivalentgewicht ca. 14'000 g/Eq., sprühgetrocknet. Verwendet wurde die Fraktion 0 - 125 µm, < 4 % über 125 µm.

### Desmomelt VP KA 8702:

Hydroxyterminiertes thermoplastisches Polyurethan, (Bayer MaterialScience, D-Leverkusen);
Schmelzpunkt 50 °C, stark kristallisierend, verwendet wurde die Fraktion 0 - 100 µm, < 4 % über 100 µm. Angenommene OH-Equivalent 3500 g/Eq.

### Griltex D-1929A/P0-125:

Aminoterminiertes Copolyamid (EMS-Griltex, CH-Domat/Ems), Molekulargewicht ca. 7000 Da, NH-Equivalent 3570 g/Eq., Schmelzbereich 70 - 80 °C, Cryogemahlen zu Pulver 0 - 125 µm, < 4 % über 125 µm.

### Vestamelt X1027-P1:

Aminoterminiertes Copolyamid (Degussa AG, D-Marl);
Schmelzbereich 110 - 125 °C, Molekulargewicht ca. 6600 Da, NH-Equivalent 3300 g/Eq., gemahlen zum Pulver 0 - 80 µm, < 4 % über 80 µm.

### B3) Zuschlagstoffe

### Jeffamine T 403:

Trifunktionelles aliphatisches Amin (Huntsman, B-Everberg);
NH-Equivalent 146 g/Eq.

### Unimoll 66 M:

Dicyclohexylphthalat (Lanxess AG, D-Leverkusen);
Weichmacher, Schmelzpunkt 64 °C, Pulver 0 - 40 µm.

### Tegokat P-128:

Dibutylzinndilaurat, 75 % auf mikronisierter Kieselsäure (Goldschmidt TIB, D-Mannheim);
freifliessendes Pulver, Katalysator für die Isocyanat-Hydroxyl-Reaktion.

### Resiflow PV 88:

Verlauf- und Substratbenetzungsmittel für Pulverlacke (Worlee-Chemie AG, D-Luenburg).Weisses Pulver (mikronisierte Kieselsäure mit 66 -68 % aktiver Substanz).

### Worlee-Add 902:

Entgasungs- und Entlüftungsmittel, Benzoinersatz (Worlee-Chemie AG, D-Luenburg).
Weisses Pulver (mikronisierte Kieselsäure mit 67 -69 % aktiver Substanz).

### Borchi Gol LA 2:

Netzmittel auf Basis Polydimethylsiloxan-copolymer (Borchers GmbH, D-Langenfeld)

### Tergitol TMN-6:

Polyethylenglycol-trimethylnonylether, Netzmittel (Dow Europe GmbH, CH-Horgen).

### Angaben zu den Vernetzungsversuchen

| | |
|---|---|
| Festes Isocyanat: | Art |
| Mittlere Partikelgrösse: | µm |
| phr: | Zusatz auf 100 Teile Polymer |
| Additive: | Art; Menge |
| Agglomerationsbedingungen: | a) Tablettenpresse; Pressdruck in N/mm² oder MPa |
| | b) Kontinuierliche Zweiwalzen-Kompaktiermaschine; Druck auf Walzen in kN/cm |
| Vernetzungsbedingungen der Agglomerat-Pulver: | Temperatur, Zeit |

### Versuche mit Klebstoff-Formulierungen

Prüfung auf Festigkeit des Presslings nach 30 min bei Vernetzungstemperatur:
Flüssig, plastisch, elastisch, vernetzt

Prüfung der Wärmebeständigkeit bei 150 °C während 30 Minuten (Angabe in Minuten bis Haftverlust) nach Lagerung bei Raumtemperatur während 7 Tagen.

### Versuche mit Pulverbeschichtungs-Formulierungen

| | |
|---|---|
| Einbrenntemperatur | Temperatur, Zeit |
| MEK Rub | Anzahl Doppelhübe |

Prüfung der Wärmebeständigkeit bei 150 °C während 30 Minuten (Angabe in Minuten bis Haftverlust) nach Lagerung bei Raumtemperatur während 7 Tagen.

### Versuche mit Klebstoffen

### Versuch 1

| Polymer: Griltex D-1929A, aminoterminiertes Copolyamid, 0 - 125 µm, Schmelzbereich 70 - 80 °C | | | | | | | |
|---|---|---|---|---|---|---|---|
| **Festes Isocyanat** | **Mittlere Partikel-grösse / µm** | **Zusatz Teile pro 100 Teile Polymer** | **Additive Teile pro 100 Teile Polymer** | **Agglomerationsbedingungen** **a) N/mm²** **b) kN/cm** | **Vernetzungsbedingungen** | **Anfangsfestigkeit bei Vernetzungstemperatur** | **Wärmebeständigkeit bei 150 °C** |
| a) ohne Isocyanat | --- | --- | --- | a) 97.5 | 95 °C/ 30 Min. | plastisch | < 2 Min. /150 °C |
| b) IPDI-T 2.1 | 1.2 | 9.6 | --- | a) 97.5 | 95 °C / 30 Min. | vernetzt | > 30 Min. /150 °C |
| c) IPDI-T 2.2 | 13.8 | 9.6 | --- | a) 156 | 95 °C / 30 Min. | vernetzt | > 30 Min. /150 °C |
| d) TDI-U 1.0 | 7.5 | 7.0 | --- | a) 156 | 95 °C / 30 Min. | vernetzt | > 30 Min. / 150 °C |

### Versuch 2

Polymer: Vestamelt X1027-P1, aminoterminiertes Copolyamid, 0 - 80 µm, Schmelzbereich 110 - 125 °C

| **Festes Isocyanat** | **Mittlere Partikel-grösse / µm** | **Zusatz Teile pro 100 Teile Polymer** | **Additive Teile pro 100 Teile Polymer** | **Agglomerationsbedingungen** **a) N/mm²** **b) kN/cm** | **Vernetzungsbedingungen** | **Anfangsfestigkeit bei Vernetzungstemperatur** | **Wärmebeständigkeit bei 150 °C** |
|---|---|---|---|---|---|---|---|
| a) ohne Isocyanat | --- | --- | --- | a) 244 | 135 °C / 30 Min. | plastisch | < 5 Min. / 150 °C |
| b) IPDI-T 2.1 | 1.2 | 9.6 | --- | a) 244 | 135 °C / 30 Min. | vernetzt | > 30 min. / 150 °C |
| c) IPDI-T 2.1 | 1.2 | 9.6 | 12 T. Unimoll 66 | a) 244 | 135 °C / 30 Min. | vernetzt | > 30 Min. / 150 °C |

### Versuch 3

Polymer: Polycaprolactone CAPA 2803, f = 2, Schmelztemperatur 58 - 60 °C

| **Festes Isocyanat** | **Mittlere Partikel-grösse / µm** | **Zusatz Teile pro 100 Teile Polymer** | **Teile pro 100 Teile Polymer** | **Additive Agglomerationsbedingungen** **a) Druck N/mm²** **b) kN/cm** | **Vernetzungsbedingungen** | **Anfangsfestigkeit bei Vernetzungstemperatur** | **Wärmebeständigkeit bei 150 °C** |
|---|---|---|---|---|---|---|---|
| a) ohne Isocyanat | --- | --- | --- | a) 156 | 95 °C/30 Min. | niederviskos | < 2 Minuten / 150 °C |
| b) IPDI-T 2.1 | 1.2 | 9.6 | --- | a) 156 | 95 °C / 30 Min. | hochviskos | > 30 min. / 150 °C |
| c) IPDI-T 2.1 | 1.2 | 9.6 | 0.15 T DBTL | a) 156 | 70 °C / 30 Min. | plastisch | > 30 Min. / 150 °C |
| d) IPDI-T 2.1 | 1.2 | 9.6 | 0.15 T DBTL | a) 156 | 85 °C / 30 Min. | vernetzt | > 30 Min. / 150 °C |
| e) IPDI-T 2.1 | 1.2 | 9.6 | 0.15 T DBTL | b) 3.26 | 85 °C / 30 Min. | vernetzt | > 30 Min. / 150 °C |
| f) IPDI-T 2.2 | 13.8 | 9.6 | 0.15 T DBTL | a) 156 | 95 °C / 30 Min. | vernetzt | > 30 Min. / 150 °C |
| g) IPDI-T 2.3 | 8.2 | 9.6 | 10 Eq.-% deakt. mit Jeffamine 403 0.15 T DBTL | a) 156 | 95 °C / 30 Min. | vernetzt | > 30 Min. / 150 °C |

### Versuch 4

Polymer: Polycaprolactone Gemisch 83 Gew. T. CAPA 6100, f = 2, + 17 Gew. T. CAPA 4801, f = 4; Schmelztemperatur 58 °C

| **Festes Isocyanat** | **Mittlere Partikelgrösse / µm** | **Zusatz Teile pro 100 Teile Polymer** | **Additive Teile pro 100 Teile Polymer** | **Agglomerations- ll bedingungen** **a) N/mm²** **b) kN/cm** | **Vernetzungsbedingungen** | **Anfangsfestigkeit bei Vernetzungstemperatur** | **Wärmebeständigkeit bei 150 °C** |
|---|---|---|---|---|---|---|---|
| a) TDI-U 1.0 | 7.5 | 7.0 | 0.075 DBTL | a) 244 | 85 °C / 30 Min. | elastisch | > 30 Min. / 150 °C |
| b) TDI-U 1.0 | 7.5 | 7.0 | 0.075 DBTL | a) 244 | 95°C / 30 Min. | vernetzt | > 30 Min. / 150 °C |
| c) IPDI-T 2.1 | 1.2 | 9.6 | 0.15 T DBTL | a) 156 | 85 °C / 30 Min. | vernetzt | > 30 Min. / 150 °C |
| d) IPDI-T 2.1 | 1.2 | 9.6 | 0.15 T DBTL | b) 2.93 | 70 °C / 30 Min. | vernetzt | > 30 min. / 150 °C |
| e) IPDI-T 2.1 | 1.2 | 9.6 | 0.15 T DBTL | b) 2.93 | 95 °C / 30 Min. | vernetzt | > 30 min. / 150 °C |

### Versuch 5

Polymer: Desmomelt VP KA 8702; hydroxyl-terminiertes Polyester-Polyurethan, 0 - 100 µm, Schmelzpunkt 50 °C.

| **Festes Isocyanat** | **Mittlere Partikelgrösse / µm** | **Zusatz pro 100 Teile Polymer** | **Additive Teile pro 100 Teile Polymer** | **Agglomerationsbedingungen** **a) N/mm²** **b) kN/cm** | **Vernetzungsbedingungen** | **Anfangsfestigkeit bei Vernetzungstemperatur** | **Wärmebeständigkeit bei 150 °C** |
|---|---|---|---|---|---|---|---|
| a) ohne Isocyanat | --- | --- | --- | a) 117 | 85 °C / Min. | plastisch | < 3 Min. /150 °C |
| b) IPDI-T 2.1 | 1.2 | 9.6 | 0.15 T DBTL | a) 117 | 70 °C / 30 Min. | vernetzt | > 30 Min. /150 °C |
| c) IPDI-T 2.1 | 1.2 | 9.6 | 0.15 T DBTL | a) 117 | 85 °C / 30 Min. | vernetzt | > 30 Min. /150 °C |

### Versuch 6

Polymer Degalan VP 1029 F; hydroxyfunktionelles Perlpolymerisat auf Basis Copolymer MMA, BMA; Tg = 60 °C; 0 - 125 µm

| **Festes Isocyanat** | **Mittlere Partikelgrösse / µm** | **Zusatz Teile pro 100 Teile Polymer** | **Additive Teile pro 100 Teile Polymer** | **Agglomerationsbedingungen a) N/mm² b) kN/cm** | **Vernetzungsbedingungen** | **Anfangsfestigkeit bei Vernetzungstemperatur** | **Wärmebeständigkeit bei 150 °C** |
|---|---|---|---|---|---|---|---|
| a) ohne Isocyanat | --- | --- | --- | a) 244 | 95 °C / 30 Min. | plastisch | < 6 Min. / 150 °C |
| b) IPDI-T 2.1 | 1.2 | 9.6 | 0.15 T DBTL 25 T Ultramoll 66 | a) 244 | 95 °C / 30 Min. | vernetzt | > 30 Min. / 150 °C |

### Zugscherfestigkeitsprüfungen (in Anlehnung an DIN 53455)

### Versuch 7

| | |
|---|---|
| Pressverklebung: | Buchenholz 5 mm Dicke / Grundiertes Aluminium 2 mm Dicke; 20 x 20 mm² Überlappung |
| Vernetzung: | 95 °C / 30 Minuten, anschliessend 7 Tage Lagerung bei Raumtemperatur |
| Prüfgeschwindigkeit: | 100 mm / Minute |

| **Proben** | **Kurzbeschreibung Proben** | **Zugscherfestigkeit** | **Bruchbild** |
|---|---|---|---|
| Versuch 1 b | IPDI-T 2.1 aminoterminiertes Copolyamid Griltex D-1929A | 10.2 MPa | kohäsiv |
| Versuch 3 d | IPDI-T 2.1 Polycaprolactone CAPA 2803 0.15 % DBTL | 8.2 MPa | überwiegend kohäsiv |
| Versuch 4 b | IPDI-T 2.1 Polycaprolactone Capa 6100/4801 0.15 % DBTL | 7.97 MPa | überwiegend kohäsiv |

### Versuche mit Pulverlackformulierungen

### Versuch 8

| | |
|---|---|
| Polymer: | Polycaprolactone CAPA 2803, gemahlen auf Partikelgrössen kleiner 80 µm |
| Additive: | 0.10 phr DBTL |
| | 1 phr Resiflow PV 88 |
| | 1 phr Worlee-Add 902 |
| | 1 phr Borchi Gol LA2 |

Der Pulverlack wurde auf Partikelgrösse unter 125 µm gemahlen, ungefähr 100 g/m² wurde auf (mit Silangemisch geprimertes) Aluminium appliziert und eingebrannt.

| **Festes Isocyanat** | **Mittlere Partikelgrösse / µm** | **Zusatz Teile pro 100 Teile Polymer** | **Additive Teile pro 100 Teile Polymer** | **Agglomerationsbedingungen Walzenpressdruck** | **Einbrennbedingungen** | **Xylol / MEK Doppelhübe** | **Wärmebeständigkeit** |
|---|---|---|---|---|---|---|---|
| IPDI-T 2.1 | 1.2 | 10 | siehe vorstehend | 2.93 kN/cm bei 4.1 UPM | 95 °C / 30 Min. | > 100 | > 30 Min. / 150 °C |

### Versuch 9

Die Pulverlackformulierung gemäss Versuch 8, mit Partikelgrösse kleiner 125 µm, wurde in Wasser mit 0.1 % Tergitol TMN-6 als Netzmittel dispergiert. Die wässerige Dispersion wurde, mit einem Trockengewicht von ungefähr 100 g/m², auf (mit Silangemisch geprimertem) Aluminium appliziert, bei Raumtemperatur getrocknet, und bei 95 °C während 30 Minuten eingebrannt und vernetzt.

| **Festes Isocyanat** | **Mittlere Partikelgrösse / µm** | **Zusatz Teile pro 100 Teile Polymer** | **Additive Teile pro 100 Teile Polymer** | **Agglomerationsbedingungen Walzenpressdruch** | **Einbrennbedingungen** | **Xylol / MEK Doppelhübe** | **Wärmebeständigkeit** |
|---|---|---|---|---|---|---|---|
| IPDI-T 2.1 | 1.2 | 10 | siehe vorstehend | 2.93 kN/cm bei 4.1 UPM | 95 °C / 30 Min. | > 100 | > 30 Min. / 150 °C |

## Patentansprüche

1. Verfahren zur Herstellung einer thermoreaktiven Zusammensetzung (Z), umfassend die Schritte:
a) Bereitstellung wenigstens eines festen, insbesondere mikronisierten Di- oder Polyisocyanats (I);
b) Bereitstellung wenigstens eines insbesondere pulverförmigen Polymers (P) mit isocyanat-reaktiven Gruppen;
c) Herstellung einer homogenen Mischung (M), umfassend mindestens das Isocyanat (I) und das Polymer (P);
d) Verdichtung der Mischung (M) zu Formteilen (F);
e) optional, Zerkleinern der Formteile (F);
wobei das Polymer (P) in Anwesenheit des Isocyanats (I) im wesentlichen nicht aufgeschmolzen wird.

2. Verfahren gemäss Anspruch 1,
wobei das Isocyanat (I) während der Herstellung der thermoreaktiven Zusammensetzung (Z) keiner Temperatur > 75 °C, vorzugsweise > 60 °C ausgesetzt wird.

3. Verfahren gemäss einem der Ansprüche 1 oder 2,
**dadurch gekennzeichnet, dass** der Erweichungs- oder Schmelzpunkt des Polymers (P) weniger als 40 °C unterhalb, vorzugsweise weniger als 20 °C unterhalb der Reaktionstemperatur des Isocyanats (I) liegt, besonders bevorzugt gleich oder grösser ist als die Reaktionstemperatur des Isocyanats (I).

4. Verfahren gemäss einem der Ansprüche 1 bis 3,
**dadurch gekennzeichnet, dass** es keinen Extrusionsschritt in der Anwesenheit des Isocyanats (I) umfasst.

5. Verfahren gemäss einem der Ansprüche 1 bis 4,
**dadurch gekennzeichnet, dass** in Schritt d) Pressagglomeration angewendet wird, vorzugsweise bei Temperaturen im Bereich von 10 °C bis 75 °C, bevorzugt im Bereich von 20 °C bis 60 °C.

6. Verfahren gemäss einem der Ansprüche 1 bis 5,
**dadurch gekennzeichnet, dass** das wenigstens eine insbesondere pulverförmige Polymer (P) eine Erweichungs- oder Schmelztemperatur im Bereich von etwa 40 °C bis etwa 140 °C aufweist.

7. Verfahren gemäss einem der Ansprüche 1 bis 6,
**dadurch gekennzeichnet, dass** das wenigstens eine insbesondere pulverförmige Polymer (P) eine Partikelgrösse von < 300 µm, vorzugsweise von < 160 µm, besonders bevorzugt von < 80 µm aufweist, wobei maximal 4 % der Partikel über der angegebenen oberen Grenze liegen können.

8. Verfahren gemäss einem der Ansprüche 1 bis 7,
**dadurch gekennzeichnet, dass** das feste, insbesondere mikronisierte Isocyanat (I) eine arithmetisch gemittelte Partikelgrösse d₅₀ im Bereich von etwa 0.01 µm bis etwa 25 µm aufweist, vorzugsweise im Bereich von etwa 0.1 µm bis etwa 10 µm.

9. Verfahren gemäss einem der Ansprüche 1 bis 8,
**dadurch gekennzeichnet, dass** das feste, insbesondere mikronisierte Isocyanat (I) oberflächendesaktiviert ist.

10. Thermoreaktive Zusammensetzung (Z), erhältlich durch ein Verfahren gemäss einem der Ansprüche 1 bis 9.

11. Thermoreaktive Zusammensetzung insbesondere gemäss Anspruch 10, enthaltend
a) wenigstens ein festes, insbesondere mikronisiertes Isocyanat (I);
b) wenigstens ein insbesondere pulverförmiges Polymer (P) mit isocyanat-reaktiven Gruppen;
**dadurch gekennzeichnet, dass** das Isocyanat (I) und das Polymer (P) schmelzfrei und im wesentlichen unreagiert vereinigt vorliegen.

12. Thermoreaktive Zusammensetzung gemäss Anspruch 11,
**dadurch gekennzeichnet, dass** der Erweichungs- oder Schmelzpunkt des Polymers (P) weniger als 40 °C unterhalb, vorzugsweise weniger als 20 °C unterhalb der Reaktionstemperatur des Isocyanats (I) liegt, besonders bevorzugt grösser ist als die Reaktionstemperatur des Isocyanats (I).

13. Thermoreaktive Zusammensetzung gemäss einem der Ansprüche 10 bis 12,
**dadurch gekennzeichnet, dass** es sich um einen heissvernetzenden Schmelzklebstoff handelt.

14. Verwendung einer thermoreaktiven Zusammensetzung gemäss einem der Ansprüche 10 bis 13 als heissvernetzender Schmelzklebstoff.
